# EUROPÄISCHE PATENTANMELDUNG

(11) **EP 2 026 290 A1**
(43) Veröffentlichungstag der Anmeldung: **18.02.2009**
(21) Anmeldenummer: 07015650.0
(22) Anmeldetag: 08.08.2007
(51) Int. Cl.: G07C 9/00, G07F 17/12

(54) **Schließfachanlage, Logistiksystem und Verfahren zum Betreiben der Schließfachanlage**

(71) Anmelder: Deutsche Post AG, 53113 Bonn (DE)
(72) Erfinder: Frankenberg, Steffen, 53359 Rheinbach (DE); Liss, Rebekka, 53225 Bonn (DE); Dirk, Sebastian, 53129 Bonn (DE)
(74) Vertreter: Jostarndt, Hans-Dieter

(57) **Zusammenfassung**

Die Erfindung betrifft eine Schließfachanlage zur Einstellung und/oder Abholung von Gegenständen in/aus Fächern der Schließfachanlage.

Erfindungsgemäß zeichnet sich die Schließfachanlage (10) dadurch aus, dass sie mit folgenden Mitteln zusammenwirkt:
• einem Mittel zum Empfangen eines Gegenstandsidentifikationscodes,
• einem Mittel zum Erfassen eines mit einem Gegenstand verbundenen Identifikationscodes,
• einem Mittel zum Erzeugen eines Zugriffscodes und
• einem Mittel zum Übermitteln des Zugriffscodes.

Die Erfindung beinhaltet ferner ein Logistiksystem und ein Verfahren zur Einstellung und/oder Abholung von Gegenständen in/aus der Schließfachanlage.

## Beschreibung

Die Erfindung betrifft eine Schließfachanlage zur Einstellung und Abholung von Gegenständen in bzw. aus der Schließfachanlage.

Die Erfindung betrifft ferner ein die Schließfachanlage enthaltendes Logistiksystem und ein Verfahren zum Betreiben der Schließfachanlage.

Elektronische Schließfachanlagen und Verfahren zu ihrem Betreiben sind bekannt und in folgenden Patentschriften der Deutschen Post AG beispielhaft dargestellt: EP 1 408 801, EP 1 408 802, EP 1 409 160, EP 1 421 537 und EP 1 438 641.

Diese bekannten elektronischen Schließfachanlagen zeichnen sich dadurch aus, dass sie sowohl registrierten als auch nicht registrierten Benutzern zur Verfügung stehen.

Der vorliegenden Erfindung liegt die Aufgabe zugrunde, eine Schließfachanlage bereitzustellen, die eine Abholung von eingelieferten Gegenständen weiter vereinfacht.

Erfindungsgemäß wird diese Aufgabe durch eine Schließfachanlage nach Anspruch 1 gelöst.

Vorteilhafte Weiterbildungen der Schließfachanlage ergeben sich aus den Unteransprüchen 2 bis 5.

Die Aufgabe wird ferner durch ein Logistiksystem nach Anspruch 6 gelöst.

Ferner wird die Aufgabe durch ein Verfahren zum Betreiben der Schließfachanlage nach Anspruch 7 gelöst. Vorteilhafte Ausführungsformen des Verfahrens ergeben sich aus den Unteransprüchen 8 bis 11.

Die Erfindung sieht vor, eine Schließfachanlage so auszugestalten, dass sie mit folgenden Mitteln zusammenwirkt:
- einem Mittel zum Empfangen eines Gegenstandsidentifikationscodes,
- einem Mittel zum Erfassen eines mit einem Gegenstand verbundenen Identifikationscodes,
- einem Mittel zum Erzeugen eines Zugriffscodes und
- einem Mittel zum Übermitteln des Zugriffscodes.

Hierdurch wird die Schließfachanlage so ausgestaltet, dass sie auf eine besonders bevorzugte Weise in ein Logistiksystem integriert werden kann.

Bei einem Einliefern von wenigstens einem Gegenstand in die Schließfachanlage wird ein Identifikationscode (Gegenstandsidentifikationscode) erfasst.

Der Identifikationscode ist dem Gegenstand, beziehungsweise den Gegenständen, die für eine Aushändigung an einen Nutzer vorgesehen sind, zugeordnet.

Es ist sowohl umfasst, dass jedem einzelnen Gegenstand ein ihn eindeutig identifizierbarer Identifikationscode zugeordnet wird als auch, dass mehreren für eine Aushändigung an den Nutzer vorgesehenen Gegenständen eine gemeinsame Identifikationsnummer zugeordnet wird.

Bei dem Gegenstand beziehungsweise den Gegenständen kann es sich beispielsweise um eine Postsendung oder um eine für den Nutzer vorgesehene Warenlieferung handeln.

Eine besonders bevorzugte Ausführungsform der Erfindung sieht vor, einen angemeldeten oder nicht angemeldeten Nutzer der Schließfachanlage über eine vorgesehene, bevorstehende oder erfolgte Einstellung des Gegenstandes, insbesondere einer Postsendung, zu informieren.

Die erfindungsgemäße Schließfachanlage wird in einer besonders bevorzugten Ausführungsform als eine elektronische Schließfachanlage ausgestaltet.

Es ist jedoch gleichfalls möglich, die erfindungsgemäße Schließfachanlage als einen Verkaufsautomaten einzusetzen, der eine Abholung von für einen Nutzer eingelieferten Waren ermöglicht.

Hierbei kann die Transaktionsnummer weitergehende Bedeutung haben als bisher bekannte Transaktionsnummern. Beispielsweise umfasst die erfindungsgemäße Transaktionsnummer ggf. auch erheblich aufwendigere Codes, die gegenüber einem Missbrauch noch besser geschützt sind.

Eine besonders bevorzugte Ausführungsform der Erfindung beinhaltet eine elektronische Übermittelung der Transaktionsnummer (TAN) an ein Benutzergerät.

Wird der für den Nutzer vorgesehene Gegenstand im Folgenden an einer der Schließfachanlagen zugestellt, erkennt das IT-System (Computersystem) anhand des Identifizierers, dass es sich um den angekündigten Gegenstand dieses Nutzers handelt. Dieser Sendung wird automatisch eine TAN zugeordnet.

Das IT-System prüft die zu diesem Identifizierer hinterlegten Nutzerdaten und schickt eine Benachrichtigung an die angegebene Email-Adresse und/oder Mobilfunknummer. In der Benachrichtigung wird dem Nutzer die TAN mitgeteilt. Der Nutzer kann dann mit Hilfe seiner Daten und der TAN die Sendung aus den Schließfachanlagen entnehmen.

Zur Erleichterung eines Abholens durch nicht registrierte Benutzer beinhaltet die Erfindung ein Verfahren zur Lieferung einer Sendung zu einer von mehreren elektronischen Schließfachanlagen, bei dem die Sendung zu einer Zustelladresse transportiert wird, an der ein Benachrichtigungsmittel deponiert wird, falls festgestellt wird, dass keine Übergabe der Sendung an einen berechtigten Nutzer möglich ist.

Besonders bevorzugte Ausführungsformen der Erfindung zeichnen sich durch folgende Schritte aus:
- Verbindung einer zentralen Datenverwaltungseinheit mit wenigstens einer elektronischen Schließfachanlage zur Übermittelung von Informationen über freie Fächer der Schließfachanlage an die Datenverwaltungseinheit und Übermittelung der Information über freie Fächer an eine mobile Vorrichtung zur Erzeugung von Informationen über freie Fächer einer Schließfachanlage;
- Auswertung der Informationen der mobilen Vorrichtung über freie Fächer einer Schließfachanlage und Zuordnung eines Beladungsplatzes einer Schließfachanlage zu einem Nutzer der Sendung durch ein Identifikationsmittel, wobei das Benachrichtigungsmittel wenigstens mit Daten zur Kennzeichnung der Schließfachanlage, Daten des Nutzers und dem Identifikationsmittel versehen wird;
- Deponierung der Sendung in einem Fach einer elektronischen Schließfachanlage, wobei wenigstens das dem Nutzer der Sendung zugeordnete Identifikationsmittel erfasst und zu dem betreffenden Fach gespeichert wird;
- Abholung der Sendung an der Schließfachanlage durch einen Abholer, wobei
   - wenigstens das dem Nutzer der Sendung zugeordnete Identifikationsmittel erfasst wird,
   - ein Vergleich des dem Nutzer der Sendung zugeordneten Identifikationsmittels mit den für belegte Fächer gespeicherten Identifikationsmitteln erfolgt, und
   - die Ausgabe der deponierten Sendung aus einem Fach erfolgt, falls das Ergebnis des Vergleiches ergibt, dass das dem Nutzer zugeordnete Identifikationsmittel mit einem zu dem betreffenden Fach gespeicherten Identifikationsmittel übereinstimmt.

Das Konzept zur Nutzung einer Schließfachanlage ohne vorherige Registrierung beinhaltet mehrere Ausführungsformen:
- Der Nutzer hinterlegt seine Handynummer oder Email-Adresse bereits bei der Bestellung beim Versender. Diesen Daten fügt der Versender einen eindeutigen Identifizierer einer Sendung (in der Regel den Barcode auf dem Adressaufkleber) zu und übermittelt sie an das IT-System der Schließfachanlagen/des Logistikers.
- Der Nutzer (oder Privatversender) teilt den eindeutigen Identifizierer (z.B. den Barcode auf der Prepaid-Marke) sowie die Handynummer oder Email-Adresse des Nutzers auf der Internetseite des Logistikers/der Schließfachanlagen mit. Denkbar ist ebenfalls eine Mitteilung per Telefon, Email oder SMS. Eine Weiterbildung hiervon beinhaltet eine Applikation zur Eingabe der Mobilfunknummer in Kombination mit dem eindeutigen Identifizierer.
- Eine Plattform, beispielsweise eine Internetplattform, die beispielsweise als Auktionsplattform oder als Frankierplattform mit Mitteln zur Durchführung von elektronischen Auktionen und/oder digitalen Frankierungen versehen ist, kann gleichfalls Angaben wie Handynummer oder Email-Adresse übermitteln.
- Ferner ist eine Erzeugung des eindeutigen Identifizierers der Sendung auch durch die Auktionsplattform oder die Frankierplattform möglich.

Wird die Sendung des Nutzers im Folgenden an einer der Schließfachanlagen zugestellt, erkennt das IT-System anhand des Identifizierers, dass es sich um die angekündigte Sendung dieses Nutzers handelt. Dieser Sendung wird automatisch eine TAN zugeordnet.

Das IT-System prüft die diesem Identifizierer hinterlegten Nutzerdaten und schickt eine Benachrichtigung an die angegebene Email-Adresse und/oder Mobilfunknummer. In der Benachrichtigung wird dem Nutzer die TAN mitgeteilt. Der Nutzer kann dann mit Hilfe seiner Daten und der TAN die Sendung aus dem Schließfach entnehmen.

Besonders bevorzugte Ausführungsformen der Erfindung sehen vor, Sendungsdaten und/oder Identifikationsangaben zu dem Nutzer an einen Computer des Logistiksystems (IT-System des Logistikers) zu senden.

Bei Einstellung eines Gegenstandes in die Schließfachanlage wird ein für den Nutzer bestimmter Zugangscode für eine einmalige Entnahme des Gegenstandes aus der Schließfachanlage erzeugt.

Bei dem Gegenstand handelt es sich beispielsweise um eine Postsendung, beispielsweise ein Paket oder einen Brief. Es ist jedoch gleichfalls möglich, die Erfindung für ein Einstellen sonstiger Warenlieferungen einzusetzen, beispielsweise für eine Einstellung von bei einem Händler gekaufter Ware in die Schließfachanlage. Hierbei bildet die Ware den erfindungsgemäß hinterlegten Gegenstand. Hierdurch ist es möglich, eine verlängerte Ladentheke zu realisieren, die eine Entnahme der Ware zu beliebigen Zeiten ermöglicht.

Der erzeugte Zugangscode wird an den Nutzer übermittelt.
In einem späteren Verfahrensschritt holt der Nutzer den Gegenstand unter Einsatz des Zugangscodes ab. Zweckmäßigerweise ist hierzu die Schließfachanlage so ausgestattet, dass sie eine Eingabe des Zugangscodes und/oder ein Empfangen eines an sie gesendeten Zugangscodes ermöglicht.

Die erfindungsgemäße Schließfachanlage dient zur Einstellung und Abholung von Gegenständen in bzw. aus Fächern der Schließfachanlage, wobei jedes Fach eine durch ein Verschlussmittel verschließbare Tür aufweist. Das Verschlussmittel ist mit einer Steuereinheit verbunden, die Mittel zur Ansteuerung des Verschlussmittels über Steuersignale umfasst. Die Steuereinheit wiederum ist mit einer Datenverarbeitungseinheit verbunden, wobei jedem Fach eine eindeutige Fach-Identifikation zugeordnet ist, wobei die Abmessungen von wenigstens zwei der Fächer voneinander verschieden sind und diese Abmessungen der Fächer in der Datenverarbeitungseinheit hinterlegt sind. Ferner ist von der Datenverarbeitungseinheit abrufbar, in welchen Fächern sich ein Gegenstand befindet.

Die Erfindung beinhaltet ein Logistiksystem zum Befördern eines Gegenstandes auf einem Transportweg innerhalb eines Postverteilnetzes.

Der Begriff Logistiksystem ist dabei im Rahmen der Erfindung in einer weiten Bedeutung zu verstehen. Er umfasst insbesondere Systeme, welche die erforderlichen Mittel und Einrichtungen enthalten, um den Transport von Gegenständen von einem Abgangsort zu einem Zustellpunkt auf einem Transportweg innerhalb eines Postverteilnetzes durchzuführen. Ferner sind die erfindungsgemäßen Schließfachanlagen Bestandteil des Logistiksystems.
Bei dem Abgangsort handelt es sich beispielsweise um einen Lagerort oder Einlieferungsort beispielsweise eines zu verkaufenden beziehungsweise verkauften Gegenstandes.

Ferner beinhaltet die Erfindung ein Logistiksystem, mit wenigstens einem Mittel zum Übersenden von Benachrichtigungen an Nutzer des Logistiksystems.

Dieses Logistiksystem zeichnet sich dadurch aus, dass das Mittel zum Senden der Benachrichtigungen so ausgestaltet ist, dass es mit wenigstens einer Datenbank und einer zentralen Versendekomponente zusammenwirken kann, dass die zentrale Versendekomponente so gestaltet ist, dass sie Daten der Datenbank in eine Benachrichtigungsinformation umwandeln kann, und dass die zentrale Versendekomponente mit einer Kommunikationsschnittstelle zur Übermittelung der Benachrichtigungsinformation an Empfängergeräte verbunden ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel einer erfindungsgemäßen Schließfachanlage zum Einstellen und Abholen von Gegenständen;
- Fig. 2: ein Ausführungsbeispiel einer Bedieneinheit einer erfindungsgemäßen Schließfachanlage.

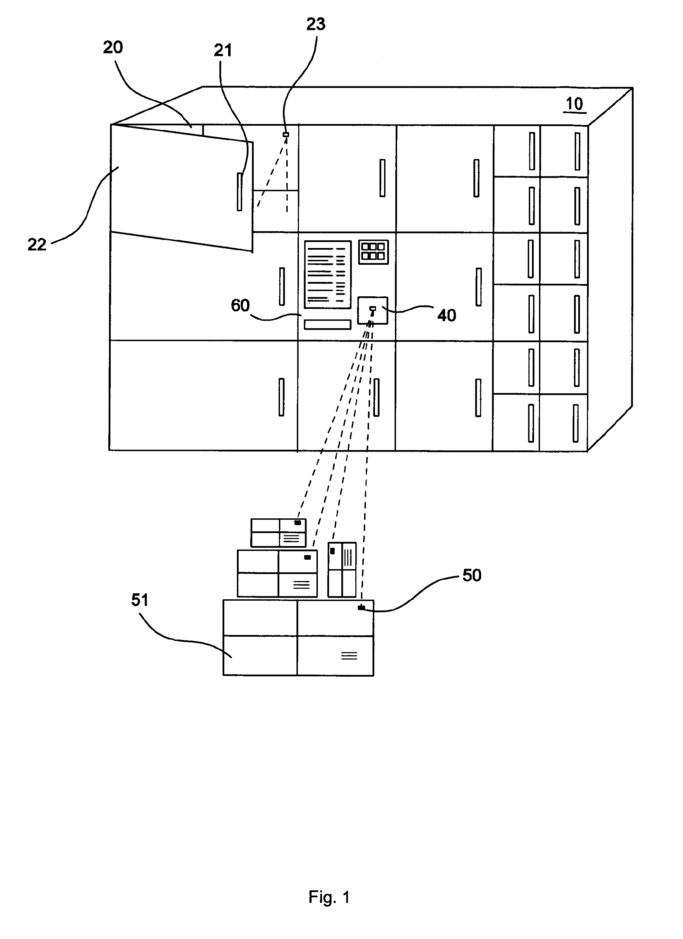

Die in Fig. 1 dargestellte Schließfachanlage stellt ein bevorzugtes Ausführungsbeispiel der erfindungsgemäßen Schließfachanlage dar, an dem die wesentlichen Merkmale der Erfindung und weitere mögliche Ausgestaltungen erläutert werden.

Die Schließfachanlage 10 umfasst mehrere Fächer 20, die jeweils mit einer Tür 22 verschließbar sind. Bei den Türen kann es sich beispielsweise um übliche Klappen handeln, die von einem Bediener manuell geschwenkt werden können. Ferner kann es sich um Türen handeln, bei denen eine üblicherweise elektronische Ansteuerung eines Mechanismus das automatische Öffnen und Schließen der Fachtür bewirkt, ohne dass ein Bediener manuell tätig werden muss.
Eine Fachtür 22 weist üblicherweise ein Verschlussmittel 21 auf, mit dem sich das Fach vor unbefugtem Zugriff verschließen lässt. In Fig. 1 sind diese Verschlussmittel 21 zur Vereinfachung der Darstellung an den Türen angeordnet. Der wesentliche Teil des Verschlussmittels kann sich jedoch auch am Fachkörper selbst befinden, so dass eine Tür beispielsweise lediglich in ein Verschlussmittel des Faches einrastet oder von diesem wieder freigegeben wird. Die Verschlussmittel können beispielsweise über Federn verfügen, welche eine Fachtür automatisch aufschwenken lassen, sobald das Verschlussmittel von einer Steuereinheit das Signal zum Öffnen eines Faches erhält. Die Fachtür kann dann beispielsweise von einem Bediener gegen die Federkraft wieder zugedrückt werden.

Vorzugsweise umfasst die Schließfachanlage 10 mehrere Fächer unterschiedlicher Größe. In Fig. 1 sind beispielhaft drei verschiedene Fachgrößen dargestellt, es können jedoch auch weitere Größenvarianten vorgesehen sein. Die Abmessungen der Fächer können beliebig variieren, so dass nicht nur die Breite oder Höhe, sondern auch die Tiefe eines Faches unterschiedlich ausgestaltet sein können.

Die Schließfachanlage weist ferner eine Bedieneinheit 60 auf, mit der Zustell- und Abholvorgänge an der Anlage abgewickelt werden. Die Bedieneinheit umfasst vorzugsweise ein Anzeigemittel wie einen Bildschirm und Mittel zur Erfassung von Informationen an der Schließfachanlage. Der Bildschirm dient zur Kommunikation mit Benutzern der Schließfachanlage. Zum Erfassen von Informationen können beispielsweise Tastaturen, Touchscreens, Barcodescanner oder sonstige Lesegeräte verwendet werden. Ferner können einem Bediener über den Bildschirm beispielsweise Belegzustände einzelner Fächer und/oder Nachrichten angezeigt werden.

Die Schließfachanlage weist ferner eine Bedieneinheit 60 auf, mit der Zustell- und Abholvorgänge an der Anlage abgewickelt werden. Die Bedieneinheit weist vorzugsweise ein Anzeigemittel wie einen Bildschirm und Mittel zur Erfassung von Informationen an der Schließfachanlage auf. Der Bildschirm dient zur Kommunikation mit Nutzern der Schließfachanlage. Zum Erfassen von Informationen können beispielsweise Tastaturen, Touchscreens, Barcodescanner oder sonstige Lesegeräte verwendet werden. Ferner können einem Bediener über den Bildschirm beispielsweise Belegzustände einzelner Fächer und/oder Nachrichten angezeigt werden.

Wird eine bestellte Sendung in die Schließfachanlage eingestellt, so kann auf Wunsch eine SMS- und Email-Benachrichtigung an den Nutzer gesendet werden. Diese individuelle Mitteilung enthält den Zugangscode. Der Nutzer geht zur Schließfachanlage und gibt dort den Zugangscode ein. Die Schließfachanlage erkennt den Zugangscode und gibt das Fach mit der Sendung frei.

Es ist besonders vorteilhaft, falls der Zugangscode eine Transaktionsnummer enthält oder selbst eine Transaktionsnummer ist.

Eine Transaktionsnummer (TAN) ist ein Einmalpasswort, das vorzugsweise aus mehreren Ziffern und/oder Buchstaben besteht. Eine hohe Datensicherheit mit einfacher Eingabe liegt beispielsweise dann vor, wenn die TAN aus vier bis acht, vorzugsweise sechs Dezimalziffern besteht. Derartige TANs sind beispielsweise aus dem Online-Banking bekannt.

Es gibt verschiedene Ansätze, um TANs zu erzeugen, zu prüfen und zum Nutzer zu übertragen. Einige davon werden im Folgenden beschrieben.
Eine Variante - genannt mTAN oder SMSTAN - besteht in der Einbindung des Übertragungskanals SMS. Dabei wird dem Nutzer nach Einlieferung des Gegenstandes in die Schließfachanlage beispielsweise per SMS eine nur für diesen Vorgang verwendbare TAN auf sein Handy gesendet. Der Auftrag muss anschließend mit dieser TAN bestätigt werden.

Alternativ kann ein Sm@rt-TAN-Generator eingesetzt werden. Die Übermittelung der TAN an den Nutzer kann entfallen, wenn Serviceanbieter und Nutzer sich auf ein Verfahren einigen, das TANs generieren kann.

Hierzu kann ein aus den Online-Banking-Anwendungen bekannter Sm@rt-TAN-Generator eingesetzt werden, der abhängig von auf manchen Maestro- (ehemals EC-) Karten gespeicherten Sicherheitsinformationen TANs in einer bestimmten Reihenfolge generiert. Da die Bank als Herausgeber der Maestro-Karte diese Sicherheitsinformationen auch kennt, kann sie die vom Nutzer generierten TANs überprüfen.

Allerdings ist die Generierung gültiger TANs nicht an das Lesegerät des jeweiligen Nutzers gebunden, so dass bei Verlust der Karte mit einem beliebigen Lesegerät gültige TANs generiert werden können. Die Sicherheit dieses Verfahrens entspricht daher in etwa einer EC-Karte mit aufgedruckten TANs.

Alternativ ist der TAN-Generator ein kleines elektronisches Gerät, das temporäre TANs unter Einbeziehung einer Nummer generiert, beispielsweise einer Kontonummer des Nutzers.

Die an den Nutzer übermittelte TAN wird von diesem zur Abholung des Gegenstandes aus der Schließfachanlage in eine Bedieneinheit eingegeben.

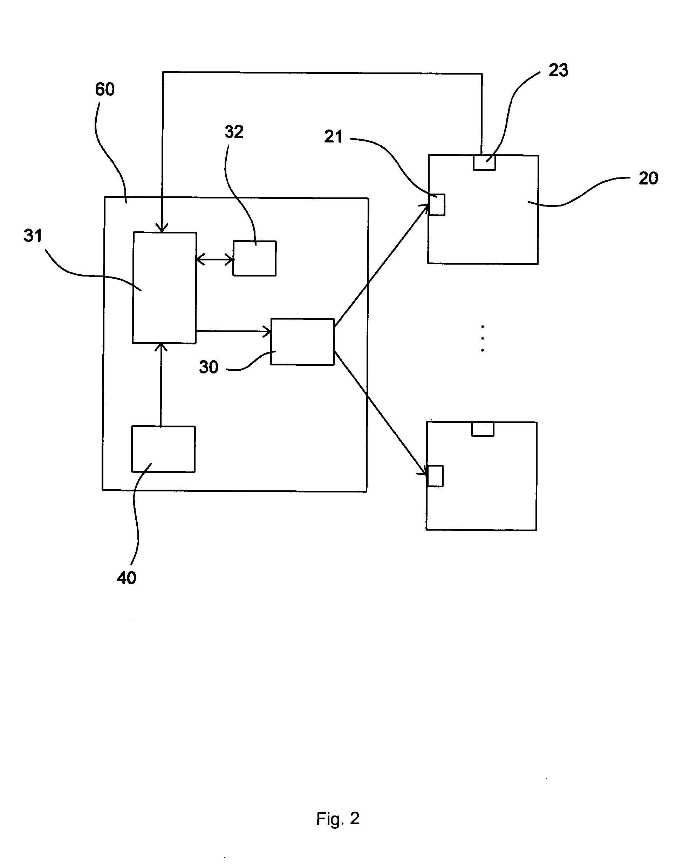

Die Bedieneinheit steht in Verbindung mit einer Datenverarbeitungseinheit 31, wie sie schematisch in Fig. 2 dargestellt ist. Die Datenverarbeitungseinheit verarbeitet die von der Bedieneinheit erhaltenen Informationen und stellt ferner Informationen bereit, die über die Bedieneinheit an einen Nutzer der Schließfachanlage weitergegeben werden sollen. Über die Datenverarbeitungseinheit werden beispielsweise die Zugriffsrechte von Nutzern überprüft, die an der Bedieneinheit einen Zugriffscode eingeben oder eine ID-Karte einschieben.

Die Anlagen-Erfassungseinrichtung 40 ist so angeordnet, dass mehrere Zugriffscodes mehrerer Paketsendungen, die von einem Zusteller in der Nähe einer Schließfachanlage 10 positioniert werden, gleichzeitig vorzugsweise durch eine Pulk-Erfassung erkannt und ausgelesen werden können. Die Anlagen-Erfassungseinrichtung 40 muss sich somit nicht direkt an oder in der Bedieneinheit 60 befinden, falls diese so angeordnet ist, dass es bei der Zugriffscodeerfassung Nachteile mit sich bringt. Die Anlagen-Erfassungseinrichtung 40 sollte zweckmäßigerweise so positioniert sein, dass eine zuverlässige Erfassung von Zugriffscodes gewährleistet ist.

Fährt ein Zusteller eine Schließfachanlage üblicherweise mit einem Handkarren an, auf dem sich alle für die Schließfachanlage vorgesehenen Sendungen befinden, ist die Anlagen-Erfassungseinrichtung zweckmäßigerweise so angeordnet, dass auf der Höhe der Ladefläche des Handkarrens alle Paketsendungen erfasst werden können. In einem anderen Ausführungsbeispiel der Erfindung können die Sendungen vom Zusteller auf einer speziell dafür vorgesehenen Fläche abgestellt werden, auf welche die Anlagen-Erfassungseinrichtung ausgerichtet ist. Beispielsweise kann eine Art Schublade oder Tablett aus der Bedieneinheit 60 herausgezogen werden, auf welcher die Sendungen platziert werden können.

Die wesentlichen Schritte des erfindungsgemäßen Verfahrens sind in dem Ablaufschema in Fig. 1 dargestellt. Vor Inbetriebnahme der Schließfachanlage müssen die Abmessungen der einzelnen Fächer den Fach-Identifkationen der Fächer zugeordnet werden. Dabei werden zweckmäßigerweise Breite, Höhe und Tiefe eines Faches berücksichtigt und in der Datenverarbeitungseinheit 31 hinterlegt.

Die Anlagen-Erfassungseinrichtung übermittelt Daten über in die Schließfachanlage einzustellende Gegenstände an eine Datenverarbeitungseinheit 31, wie sie schematisch in Fig. 2 dargestellt ist. Die Datenverarbeitungseinheit ermittelt daraufhin die freien Fächer der Schließfachanlage, in welche jede einzelne Paketsendung aufgrund ihrer Abmessungen hineinpasst.

Die freien Fächer der Schließfachanlage 10 können von der Datenverarbeitungseinheit 31 auf verschiedene Arten ermittelt werden. Beispielsweise können die aktuellen Belegzustände aller Fächer in der Datenverarbeitungseinheit gespeichert sein. Wird eine Paketsendung in ein Fach eingestellt, wird das Fach als belegt vermerkt. Wird die Sendung wieder entnommen, wird der Status des Faches entsprechend geändert und das Fach gilt als frei. Die Belegzustände der einzelnen Fächer können in der Datenverarbeitungseinheit 31 der Schließfachanlage 10 oder in einer entfernt angeordneten zentralen Datenverarbeitungseinheit gespeichert und dort abgefragt werden.

Jedes Fach verfügt vorzugsweise über eine eindeutige Fach-Identifikation, und der Identifikation sind die Abmessungen des betreffenden Faches zugeordnet. Die Zuordnungen der Fach-Identifikation zu den Abmessungen sind in der Datenverarbeitungseinheit 31 hinterlegt. Mittels eines Vergleiches der Abmessungen der Paketsendungen mit den Abmessungen der freien Fächer ermittelt die Datenverarbeitungseinheit die erforderlichen Fächer zur Einstellung der Paketsendungen. Dabei bestimmt ein in der Datenverarbeitungseinheit hinterlegter Algorithmus vorzugsweise stets das kleinste mögliche Fach, in das eine Sendung einstellbar ist. Liegt für eine Paketsendung kein freies Fach mit geeigneten Abmessungen vor, wird dies dem Zusteller auf dem Bildschirm angezeigt.

Die Fach-Identifikationen der freien Fächer, in welche Paketsendungen einstellbar sind, werden von der Datenverarbeitungseinheit 31 an eine Steuereinheit 30 übermittelt, wie sie schematisch in Fig. 2 dargestellt ist. Zusammen mit den Identifikationen wird zweckmäßigerweise ein Befehl zum Öffnen von Fächern an die Steuereinheit übermittelt. Die Steuereinheit ist so ausgebildet, dass sie durch Steuersignale die Verschlussmittel der Fächer ansteuert und so ein Öffnen und Verschließen von Schlössern aktiviert.

Sobald die Steuereinheit von der Datenverarbeitungseinheit eine oder mehrere Fach-Identifikation(en) und den Befehl zum Öffnen dieser Fächer erhalten hat, erzeugt und sendet sie die erforderlichen Steuersignale an die Fächer mit diesen Fach-Identifikationen. Die Erzeugung bzw. Übermittelung der Steuersignale kann dabei gleichzeitig oder nacheinander erfolgen.

Bei einer gleichzeitigen Übermittelung der Steuersignale öffnen sich alle angesteuerten Fächer gleichzeitig und der Zusteller kann nacheinander alle Sendungen einstellen. Bei einer aufeinander folgenden Übermittelung von Steuersignalen an die Verschlussmittel der Fachtüren öffnen sich die Fächer nacheinander und der Zusteller kann ebenfalls nacheinander alle Sendungen einstellen. Der Zusteller muss dazu erkennen, welche Fächer ausreichend groß sind und stellt die Sendungen entsprechend seiner Einschätzung ein. Es kann ferner vorgesehen sein, dass den Sendungen durch die Datenverarbeitungseinheit bereits bestimmte Fächer zugeordnet wurden und dem Zusteller diese Zuordnung angezeigt wird, so dass er die Sendungen gezielt einstellen kann. Dazu ist es jedoch erforderlich, dass dem Zusteller eine Identifikation jeder Sendung angezeigt wird, die er der Sendung entnehmen kann.

Wenn die Datenverarbeitungseinheit 31 für eine Sendung ein freies Fach ausreichender Größe ermittelt hat, wird die Kennzeichnung dem Fach zugeordnet und kann dem Zusteller angezeigt werden.

Die Kennzeichnung kann dem Zusteller beispielsweise an dem ausgewählten Fach auf einem Display angezeigt werden. Ferner besteht die Möglichkeit, auf dem Bildschirm der Bedieneinheit 60 eine graphische Darstellung aller Fächer der Schließfachanlage anzuzeigen und für jedes Fach die Paketsendung zu kennzeichnen, die in das betreffende Fach hineinpasst und somit dort eingestellt werden kann.

Bei der aufeinander folgenden Öffnung von Fächern kann es ferner vorgesehen sein, dass sich die Fächer in der Reihenfolge ihrer Größe öffnen, so dass der Zusteller auch die Paketsendungen in der Reihenfolge ihrer Größe auswählen und einstellen kann. Beispielsweise können zweckmäßigerweise zuerst die kleinsten Fächer geöffnet werden, so dass der Zusteller die kleinsten Paketsendungen der Reihenfolge nach einstellt. Danach werden jeweils die Fächer der nächsten Größe geöffnet. Diese Reihenfolge der Öffnung ist insbesondere dann zweckmäßig, wenn Paketsendungen von einem Zusteller bereits gestapelt zu einer Schließfachanlage transportiert werden und der Stapel üblicherweise vorsieht, dass kleinere Paketsendungen auf größere Paketsendungen gestapelt werden.

In einem weiteren Ausführungsbeispiel der Erfindung erfolgt zwar eine gleichzeitige Erfassung mehrerer Paketsendungen, der Zusteller muss Identifikationen oder Kennzeichnungen der einzelnen Sendungen danach jedoch nochmals erfassen. Beispielsweise werden den Sendungen von der Datenverarbeitungseinheit (31) freie Fächer zugeordnet, in welche die Sendungen aufgrund ihrer Abmessungen hineinpassen. Die Fächer werden jedoch nicht sofort geöffnet. Der Zusteller muss die Paketsendungen erneut erfassen, und erst dann öffnet sich das der Sendung zugeordnete Fach.

Um zu gewährleisten, dass nur wirklich eingestellte Sendungen als eingestellt vermerkt werden, hat es sich als zweckmäßig erwiesen, dass die Einstellung bestätigt wird. Dies kann beispielsweise durch die erneute Erfassung des Zugriffscodes der Sendung durch eine Fach-Erfassungseinrichtung 23 oder durch Drücken einer Bestätigungstaste durch den Zusteller erfolgen.

Von der Erfindung ist ebenso umfasst, dass die Zugangsdaten von einer mobilen Benutzereinheit eines Benutzers übermittelt werden.

Die Zugangdaten können erfindungsgemäß verschiedene Informationen enthalten.

Zweckmäßig ist es insbesondere, dass die Zugangsdaten Identifizierungsinformationen enthalten.

Die Identifizierungsinformationen dienen beispielsweise zur Identifikation des Nutzers des abzuholenden Gegenstandes beziehungsweise der abzuholenden Gegenstände. Ferner ist es möglich, die Identifizierungsinformationen zu einer Zuordnung von Nutzern zu Benutzergruppen einzusetzen. Beispielsweise können unterschiedlichen Benutzergruppen unterschiedliche Rechte für Handlungen an der Schließfachanlage eingeräumt werden.

Zur Erleichterung der Bedienbarkeit der Schließfachanlage ist es besonders vorteilhaft, dass den Zugangdaten Steuerungsinformationen zugeordnet sind.

Dies geschieht in einer besonders zweckmäßigen Form dadurch, dass die Steuerungsinformationen in den Zugangsdaten enthalten sind oder diesen gegebenenfalls durch eine Entschlüsselung oder sonstige Verarbeitung entnehmbar sind.

Durch die Steuerungsinformationen ist es möglich, Bedienvorgänge der Schließfachanlage noch weiter zu automatisieren.

Eine Weiterbildung der Erfindung beinhaltet ein Verfahren zur Lieferung einer Sendung zu einer elektronischen Schließfachanlage. Dieses Verfahren eignet sich insbesondere zur Erleichterung eines Abholens durch nicht registrierte Nutzer.

Dieses Verfahren zeichnet sich durch folgende Schritte aus:
- Deponierung der Sendung in einem Fach der elektronischen Schließfachanlage;
- Übermittelung der Zugangdaten an den Nutzer und/oder an eine von ihm nutzbare mobile Benutzereinheit - beispielsweise ein Mobiltelefon oder eine sonstige zur Wiedergabe von Zugangdaten geeignete Vorrichtung.
- Abholung der Sendung an der Schließfachanlage durch einen Abholer, wobei
   - wenigstens das dem Nutzer der Sendung zugeordnete Identifikationsmittel erfasst wird,
   - ein Vergleich des dem Nutzer der Sendung zugeordneten Identifikationsmittels mit den für belegte Fächer gespeicherten Identifikationsmitteln erfolgt und
   - die Ausgabe der deponierten Sendung aus einem Fach erfolgt, falls das Ergebnis des Vergleiches ergibt, dass das dem Nutzer zugeordnete Identifikationsmittel mit einem zu dem betreffenden Fach gespeicherten Identifikationsmittel übereinstimmt.

Die Übermittelung der Informationen an den Nutzer erfolgt beispielsweise über eine Benachrichtigungskomponente.

Die Benachrichtigungskomponente enthält vorzugsweise eine externe Schnittstelle für den Empfang von Ereignisdaten ED des Versandlogistiksystems.

Die externe Schnittstelle ist mit einer Steuerungsschaltung verbunden. Die Steuerungsschaltung ist mit Übertragungsmitteln zum Übertragen von Auftragsanforderungen an die zentrale Versendekomponente und an eine Communication Request Queue ausgestattet.

Die Communication Request Queue ist vorzugsweise als ein zur Speicherung von Benachrichtigungsaufträgen dienendes Speichermodul ausgestaltet. Das zur Speicherung der Benachrichtigungsaufträge dienende Speichermodul ist mit einer Leseeinheit verbunden.

Die Leseeinheit ist über eine Datenleitung mit einem Mittel zum Übermitteln des Zugriffscodes - nachfolgend beispielhaft als Versendekomponente genannt, verbunden.

Die Benachrichtigungskomponente verfügt über ein externes Interface, in das Aufträge in eine Message Queue eingetragen werden. Diese Aufträge werden timer-gesteuert von der zentralen Komponente regelmäßig ausgelesen um Daten aus der Kunden-, der Paket- und der Automaten-Datenbank ergänzt und mittels verschiedener Templates in ein push-orientiertes Mittel zur Übertragung von Informationen, beispielsweise eine Mail oder SMS umgewandelt und über eine geeignete Kommunikationsschnittstelle, vorzugsweise einen Mail- und SMS-Gateway versendet.

Ein Datenbank-Zugriff erfolgt unter Nutzung geeigneter Zugriffsmittel, vorzugsweise basierend auf der EJB-Technologie über Java-Entity-Beams.

Hierbei wird der Zugriff auf die Datenbanken transparent gekapselt. Durch das Erzeugen des Home-Interfaces eines Beans und das anschließende Suchen mit "ejbFindByPrimaryKey" wird ein über den PRIMARY KEY identifizierter Datenbank-Eintrag gelesen.

### Kommunikation zum Mail-/SMS-Gateway

Die Kommunikation zwischen der Benachrichtigungs-Komponente und dem Mail-und SMS-Gateway erfolgt über die Standard-Java-Klassen zur SMTP-Kommunikation.

Es ist zweckmäßig, eine zusätzliche Datenbanktabelle anzulegen, in der zu sendende Benachrichtigungen abgelegt werden. Die Tabelle dient auch als Zwischenspeicher für zu sendende zweite und dritte Benachrichtigungen. Die Tabelle soll nur der Verwaltung der Queue dienen, konkrete Informationen zu Paketen und Empfängern werden jeweils immer aus der Kunden- oder Paketdatenbank gelesen.

Ein Ereignis (Event) wird an eine Nachrichtenerzeugungseinheit übermittelt. Die Nachrichtenerzeugungseinheit sendet an eine Datenbank zur Verwaltung von Benutzerdaten eine Aufforderung zur Übermittelung von Benutzerdaten. Die Datenbank zur Verwaltung von Benutzerdaten sendet die Informationen über die Benutzer und die zugehörigen Daten an die Nachrichtenerzeugungseinheit. Diese Informationen werden zusammen mit zusätzlichen Benachrichtigungsinformationen, beispielsweise über den Empfänger und/oder Absender der Postsendungen, die in die Paketfächer eingebracht wurden, beziehungsweise abgeholt werden können, an eine Nachrichtenspeichereinheit MQWB übermittelt.

Ein Auslesen der anstehenden Benachrichtigungen kann sowohl push-orientiert als auch pull-orientiert erfolgen.

Die folgende bevorzugte Durchführungsform des Auslesens von Benachrichtigungen vereint die Vorteile einer push-orientierten Behandlung der zu berücksichtigenden Informationen mit einer pull-orientierten Behandlung.

Die Ausführungsform sieht vor, dass die Benachrichtigung aufgrund eines Ereignisses, in einer besonders bevorzugten Ausführungsform eines Zeitsignals, das durch einen Zeitgeber (Timer) erfolgt, an die Nachrichtenspeichereinheit übermittelt wird.

Die MQR übermittelt eine Aufforderung zum Lesen neuer Einträge an die Nachrichtenspeichereinheit MQDB. Die Nachrichtenspeichereinheit MQP liest die Eintragsinformationen von einer Datenbank und übermittelt sendungsspezifische Informationen, insbesondere den Zugriffscode und/oder weitere Angaben, beispielsweise eine Identifikationsnummer für einzelne Paketfächer, beziehungsweise darin eingebrachte Postsendungen (Parcel-ID, Benutzeridentifikationsangaben (User-ID) und/oder Informationen über die elektronische Paketfachanlage (Machine-ID) an ein zur Speicherung von Benachrichtigungsaufträgen dienendes Speichermodul CRC. Das Speichermodul CRC leitet diese Identifikationsangaben an geeignete Empfänger, beispielsweise Benutzer C der elektronischen Paketfachanlage, Beteiligte des Logistiksystems oder an die elektronische Paketfachanlage weiter.

Die genannten Empfänger, beziehungsweise für sie handelnde Datenverarbeitungseinheiten, senden ein neues Datenobjekt an das zur Speicherung von Benachrichtigungsaufträgen dienende Speichermodul CRC. Das Speichermodul leitet das neue Objekt an die Nachrichtenspeichereinheit MQDB weiter. Die Nachrichtenspeichereinheit MQDB sendet anschließend einen neuen Notification Request.

Eine besonders bevorzugte Ausführungsform der Erfindung zeichnet sich durch einen Einsatz verschiedener Klassen von Benachrichtigungen aus. Vorzugsweise wird zwischen virtuellen Klassen und Singleton-Klassen unterschieden.

Die Benachrichtigungskomponente dient insbesondere bei einem Logistiksystem mit einer Zustellung und/oder Abholung von Paketen in elektronischen Paketfachanlagen der Generierung und Versendung von Kunden-Benachrichtigungen. Hierzu werden über ein Interface Ereignisse wie Kundenregistrierung, Änderung von Kundenstammdaten, Paketeinlieferung und -abholung gemeldet. Die Benachrichtigungskomponente erstellt anhand hinterlegter Informationen eine oder mehrere push-orientierte Benachrichtigungen, wie E-Mails und/oder SMS und versendet diese über eine geeignete, vorzugsweise push-orientierte Schnittstelle, beispielsweise einen E-Mail- oder SMS-Gateway. Vorzugsweise überwacht außerdem die Benachrichtigungs-komponente die Paket-Abholung und versendet gegebenenfalls zweite und dritte Benachrichtigungen.

Die erfindungsgemäße Benachrichtigungs-Komponente ist Bestandteil eines erfindungsgemäßen Logistiksystems.

Die Benachrichtigungskomponente ist vorzugsweise ein modularer Bestandteil des Logistiksystems. Vorzugsweise beinhaltet die Benachrichtigungskomponente automatisierte Benachrichtigungsvorgänge, die wenigstens einzelne Bestandteile für eine Automatisierung des Logistiksystems enthalten. Vorzugsweise wird der Gesamtprozess des Logistiksystems integriert.

Vorzugsweise wird die Benachrichtigungskomponente von außen über Ereignisse informiert. Die Ereignisse sind vorzugsweise in verschiedene Klassen eingeordnet und lösen jeweils vorher festgelegte, beziehungsweise festlegbare und gegebenenfalls veränderbare Verarbeitungsschritte durch die Benachrichtigungskomponente aus. Ein Beispiel für ein derartiges äußeres Ereignis ist die Einlieferung eines Paketes einer elektronischen Paketfachanlage, die ein Bestandteil des Logistiksystems ist.

Die Benachrichtigungskomponente sichert das Übermitteln sämtlicher Benachrichtigungen. Dies sind sowohl Benachrichtigungen an automatisiert verarbeitende Datenverarbeitungseinheiten als auch an Empfänger. Die Benachrichtigungen können sowohl einfach als auch mehrfach erfolgen, sodass diese automatisierte Benachrichtigungskomponente auch ein automatisches Absenden von Erinnerungen ermöglicht.

Auf die dargestellte Weise ermöglicht die Benachrichtigungskomponente eine Fortbildung des Logistiksystems, eine Anpassung an Auslassungen und Nutzungen des Logistiksystems und insbesondere eine Integration von im Wesentlichen oder vollständig automatisiert wirkenden Komponenten, wie elektronischen Paketfachanlagen in das Logistiksystem.

### Bezugszeichenliste:

- 10: Schließfachanlage
- 20: Fach
- 21: Verschlussmittel, Schloss
- 22: Fachtür
- 23: Fach-Leseeinrichtung
- 30: Steuereinheit
- 31: Datenverarbeitungseinheit
- 32: Speichermittel, Speicher
- 40: Anlagen-Leseeinrichtung
- 51: Gegenstand, Postsendung, Paket
- 60: Bedieneinheit

## Patentansprüche

1. Schließfachanlage zur Einstellung und/oder Abholung von Gegenständen in/aus Fächern der Schließfachanlage,
**dadurch gekennzeichnet,**
**dass** die Schließfachanlage (10) mit folgenden Mitteln zusammenwirkt:
• einem Mittel zum Empfangen eines Gegenstandsidentifikationscodes,
• einem Mittel zum Erfassen eines mit einem Gegenstand verbundenen Identifikationscodes,
• einem Mittel zum Erzeugen eines Zugriffscodes und
• einem Mittel zum Übermitteln des Zugriffscodes.

2. Schließfachanlage nach Anspruch 1,
**dadurch gekennzeichnet,**
**dass** der Zugriffscode eine Transaktionsnummer beinhaltet.

3. Schließfachanlage nach Anspruch 1,
**dadurch gekennzeichnet,**
**dass** der Zugriffscode eine Transaktionsnummer ist.

4. Schließfachanlage nach einem der vorangegangenen Ansprüche,
**dadurch gekennzeichnet,**
**dass** sie eine Steuereinheit (30) aufweist, wobei die Steuereinheit (30) ein Mittel zur Erzeugung eines Steuersignals aufweist.

5. Schließfachanlage nach Anspruch 4,
**dadurch gekennzeichnet,**
**dass** die Steuereinheit (30) ein Mittel zur Erzeugung und/oder Übermittelung eines Steuersignals an ein Verschlussmittel zum Öffnen einer dem Gegenstand zugeordneten Tür anhand einer übermittelten Fach-Identifikationsangabe aufweist.

6. Logistiksystem
**dadurch gekennzeichnet,**
**dass** es wenigstens eine Schließfachanlage nach einem der Ansprüche 1 bis 5 enthält.

7. Verfahren zur Einstellung und/oder Abholung von Gegenständen in/aus einer Schließfachanlage,
**dadurch gekennzeichnet,**
**dass** die Schließfachanlage den Zugriffscode verarbeitet, wobei anhand der aus den Zugangdaten ermittelten Informationen wenigstens ein in der Schließfachanlage enthaltener Gegenstand identifiziert wird.

8. Verfahren nach Anspruch 7,
**dadurch gekennzeichnet;**
**dass** die Zugangdaten Steuerinformationen zur Steuerung von Mitteln der Schließfachanlage enthalten.

9. Verfahren nach Anspruch 8,
**dadurch gekennzeichnet,**
**dass** die Steuersignale ein Öffnen einer Tür der Schließfachanlage veranlassen.

10. Verfahren nach Anspruch 9,
**dadurch gekennzeichnet,**
**dass** die Schließfachanlage die Steuerinformationen so mit einer in den Zugangdaten enthaltenen Identifikationsangabe des Gegenstandes verknüpft, dass eine dem Gegenstand zugeordnete Tür geöffnet wird.

11. Verfahren nach Anspruch 9 oder 10,
**dadurch gekennzeichnet,**
**dass** die Schließfachanlage die Steuerinformationen so mit einer in den Zugangdaten enthaltenen Identifikationsangabe des Gegenstandes verknüpft, dass eine Beförderung des Gegenstandes zu einem für eine Entnahme geeigneten Fach gesteuert wird.
